# EUROPEAN PATENT APPLICATION

(11) **EP 4 219 141 A1**
(43) Date of publication of application: **02.08.2023**
(21) Application number: 23154059.2
(22) Date of filing: 30.01.2023
(51) Int. Cl.: B32B 5/02, B32B 27/12, B32B 27/18, B32B 15/14

(54) **SURFACE FILM FOR COMPOSITE LAMINATES**

(30) Priority: 28.01.2022 US 202217588004
(71) Applicant: Rohr, Inc., Chula Vista, CA 91910-2098 (US)
(72) Inventor: PUJAR, Vijay V., Rancho Santa Fe, 92067-5010 (US); POTEET, Steven, Ashland 01721 (US); VEIZAGA, Eric Darwin, Fontana, 92336 (US)
(74) Representative: Dehns

(57) **Abstract**

A composite laminate (5) includes a carbon nanomaterial or a functionalized carbon nanomaterial (10), combined with a hindered amine light stabilizer; a support veil (20); and a composite layer (50) comprising one or more layers of a reinforcement.

## Description

### FIELD

The present disclosure (invention) relates generally to surface films and laminates for use in aerospace structures and, more particularly, to functionalized carbon nanomaterial reinforced films and laminates for aerospace structures.

### BACKGROUND

Designers of aerospace equipment must balance several factors in the design and manufacture of structures and components. The designers appreciate the complex interplay between weight, strength, costs, material properties, environmental conditions and the multitude of service requirements for such structures and components. Several factors follow. First, aircraft components must be lightweight to ensure fuel economy, but strong enough to meet structural and performance requirements. Hence, composite structures often are selected due to their sturdiness and low weight densities. Second, the environment in which these structures operate also requires erosion resistance, as aerospace structures are exposed to impact by rain, sand, ice, hail and other foreign objects. These objects can degrade surface finish through abrasion, resulting in increased drag coefficients, which may contribute to reduced fuel economy for the aircraft. Third, the changes in altitude and temperature differentials during operation of an aircraft subject the aircraft's components to extreme thermal cycling that can cause microcracking. Fourth, long term exposure to sunlight and ultraviolet (UV) radiation can degrade the properties of aircraft components. Finally, the possibility of lightning strikes requires consideration of the electrical conductivity of external components. To meet performance requirements and extend performance life, designers must properly plan for and design structures and materials to function under these varied conditions.

Coatings or film laminates are often applied to the external surface of aerospace structures to assist in meeting operational requirements. However, many of the commercially available films and coatings often exhibit acceptable properties for one design factor at the expense of one or more other factors. For example, a newly designed film may provide superior erosion resistance but at the expense of degraded UV resistance or lightning strike protection. There is a need, therefore, for an improved film and laminate for use in aerospace applications that optimally addresses the multitude of needs imposed by operational and environmental conditions. Examples of aerospace structural components that may benefit from improved film and laminates include wings, fuselages, tails, nacelles and rotary blades, as well as other component parts.

### SUMMARY

A surface film for a composite laminate according to the invention is disclosed. In various embodiments, the surface film comprises a functionalized carbon nanomaterial; a hindered amine light stabilizer; a support veil; and a polymer resin.
In various embodiments, the carbon nanomaterial is a functionalized carbon nanomaterial. In various embodiments, the carbon nanomaterial comprises at least one of carbon nanofibers, carbon nanotubes or graphene nanoplatelets. In various embodiments, the carbon nanotubes may be single wall nanotubes or multiwall nanotubes. In various embodiments, the functionalization includes alkoxysilane.
In various embodiments, the surface film is applied on a composite laminate, wherein the composite laminate comprises one or more layers of a reinforcement and a polymer resin, wherein the reinforcement includes one or a plurality of continuous fiber tows, wherein a fiber tow comprises a plurality of continuous fiber filaments. In various embodiments, the reinforcement is a braid, knit, woven, nonwoven, unidirectionally or multidirectionally oriented fiber tows, or any combination thereof, the composite layer having an areal weight of at least 70 grams per square meter. In various embodiments, the composite laminate comprises one or more composite layers or plies, wherein a composite ply or composite layer includes the reinforcement and the resin, the composite layer or ply having an areal weight of at least 70 grams per square meter. In various embodiments, the reinforcement is a carbon fabric and a polymer resin, the composite layer having an areal weight of at least 70 grams per square meter. In various embodiments, the polymer resin in the composite laminate is a thermoset or a thermoplastic resin or both.
In various embodiments, the support veil is a woven or nonwoven mat of carbon fibers and a binder, the support veil having an areal weight of less than about 20 grams per square meter. In various embodiments, the support veil is a woven or non-woven layer of fiberglass.
In various embodiments, the surface film comprises a lightning strike layer positioned proximate and predominantly parallel to the surface of the support veil.
In various embodiments, the surface film further comprises additives for erosion resistance dispersed in the polymer resin. In various embodiments, the erosion resistant additives comprise of at least one of aluminum oxide, silicon dioxide, aluminosilicate, clay, silicon carbide, and aramid fibers.
A second composite laminate with a surface film is disclosed, also according to the invention. In various embodiments, the composite laminate comprises one or more layers of a reinforcement and a polymer resin, wherein the resin includes a functionalized carbon nanomaterial and a hindered amine light stabilizer.
In various embodiments, the reinforcement includes one or plurality of continuous fiber tows, wherein a fiber tow comprises a plurality of continuous fiber filaments. In various embodiments, the reinforcement is a braid, knit, woven, nonwoven, unidirectionally or multidirectionally oriented fiber tows, or any combination thereof.
In various embodiments, the composite laminate comprises one or more composite layers or plies, wherein a composite ply or composite layer includes the reinforcement and the resin, the composite layer or ply having an areal weight of at least 70 grams per square meter.
In various embodiments, the polymer resin in the composite laminate comprises a functionalized carbon nanomaterial and a hindered amine light stabilizer, wherein the functionalized carbon nanomaterial includes at least one of carbon nanofibers, carbon nanotubes or graphene nanoplatelets, and wherein the carbon nanotubes may be single walled or multiwalled carbon nanotubes. In various embodiments the carbon nanomaterial is functionalized with an alkoxysilane. In various embodiments, the alkoxysilane functionalized carbon nanomaterial is further functionalized with a hindered amine light stabilizer. In various embodiments, the polymer resin further includes alkoxysilane or hindered amine light stabilizer or an ultraviolet absorber, or any combinations thereof. In various embodiments, the polymer resin in the composite laminate is a thermoset or a thermoplastic resin. In various embodiments, the ultraviolet absorber comprises at least one of a hydroxyphenyl-triazine, a hydroxyphenylbenzotriazole, a resorcinyl triazine, or a tetraalkyl piperidine In various embodiments, the composite laminate includes a surface film on at least one surface, wherein the surface film comprises of functionalized carbon nanomaterial, a polymer resin, a hindered amine light stabilizer, and a support veil.

The invention is also defined by the following subject matter, presented as numbered clauses.
1. A surface film, comprising:
   a polymer resin;
   a hindered amine light stabilizer;
   a functionalized carbon nanomaterial, wherein the functionalized carbon nanomaterial is functionalized with an alkoxysilane; and
   a support veil.
2. The surface film of clause 1, wherein the functionalized carbon nanomaterial is further functionalized with the hindered amine light stabilizer.
3. The surface film of clause 1 or 2, further comprising an ultraviolet absorber (UVA).
4. The surface film of clause 3, wherein the ultraviolet absorber comprises at least one of a hydroxyphenyl-triazine, a hydroxyphenylbenzotriazole, a resorcinyl triazine, or a tetraalkyl piperidine.
5. The surface film of any of clauses 1-4, wherein the functionalized carbon nanomaterial is further functionalized with an ultraviolet absorber.
6. The surface film of any of clauses 1-5, wherein the functionalized carbon nanomaterial includes at least one of a graphene nanoplatelet, a carbon nanofiber, a single wall carbon nanotube, or a multiwall carbon nanotube.
7. The surface film of any of clauses 1-6, further comprising a non-carbon nanomaterial.
8. The surface film of clause 7, wherein the non-carbon nanomaterial includes at least one of a nanoclay, silicon dioxide, aluminum oxide, aluminosilicate, silicon carbide or aramid.
9. The surface film of any of clauses 1-8, further comprising a lightning strike layer comprising a metal screen positioned proximate to the support veil.
10. The surface film of any of clauses 1-9, wherein the support veil comprises a binder and at least one of carbon fibers or glass fibers, the support veil having an areal weight of less than about 20 grams per square meter.
11. A composite laminate, comprising:
   a surface film, comprising:
      a polymer resin,
      a hindered amine light stabilizer,
      a functionalized carbon nanomaterial, wherein the functionalized carbon nanomaterial is functionalized with an alkoxysilane;
      a support veil; and
   a composite substrate comprising one or more composite layers, wherein the composite layer comprises of a reinforcement and resin.
12. The composite substrate of clause 11, wherein at least one of the composite layers comprises of functionalized carbon nanomaterial, and wherein the carbon nanomaterial is functionalized with an alkoxysilane.
13. The composite substrate of clause 12, wherein the carbon nanomaterial is further functionalized with the hindered amine light stabilizer.
14. The composite substrate of clause 12 or 13, wherein at least one of the composite layers further comprises an ultraviolet absorber.
15. The composite substrate of clause 14, wherein the ultraviolet absorber comprises at least one of a hydroxyphenyl-triazine, a hydroxyphenylbenzotriazole, a resorcinyl triazine, or a tetraalkyl piperidine.
16. The composite substrate of any of clauses 12-15, wherein the composite substrate comprising of the functionalized carbon nanomaterial is further functionalized with an ultraviolet absorber.
17. The composite substrate of any of clauses 12-16, wherein the functionalized carbon nanomaterial includes at least one of a graphene nanoplatelet, a carbon nanofiber, a single wall carbon nanotube, or a multiwall carbon nanotube.
18. The composite laminate of clause 11, further comprising a non-carbon nanomaterial.
19. The composite laminate of clause 18, wherein the non-carbon nanomaterial includes at least one of a nanoclay, silicon dioxide, aluminum oxide, aluminosilicate, silicon carbide or aramid.
20. The composite laminate of clause 11, 18 or 19 wherein the surface film further comprises a lightning strike layer comprising a metal screen positioned proximate to the support veil.

The foregoing features and elements may be combined in any combination, without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the following detailed description and claims in connection with the following drawings. While the drawings illustrate various embodiments employing the principles described herein, the drawings do not limit the scope of the claims.
FIGS. 1A, 1B and 1C illustrate composite laminate lay-up constructions (or assemblies), in accordance with various embodiments;
FIGS. 2A and 2B are diagrams illustrating methods of making surface films and composite laminates as described herein, in accordance with various embodiments; and
FIG. 3 is a cross-sectional schematic that illustrates a lay-up and assembly for forming a composite laminate as described herein, in accordance with various embodiments.

### DETAILED DESCRIPTION

The following detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the disclosure. Thus, the detailed description herein is presented for purposes of illustration only and not of limitation. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an" or "the" may include one or more than one and that reference to an item in the singular may also include the item in the plural. Further, all ranges may include upper and lower values and all ranges and ratio limits disclosed herein may be combined.

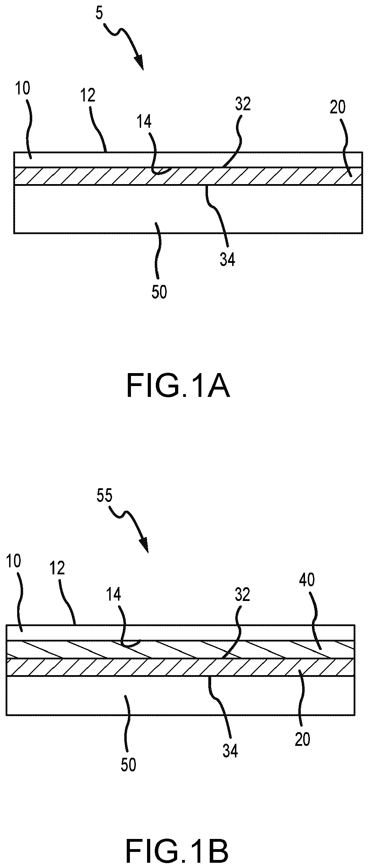

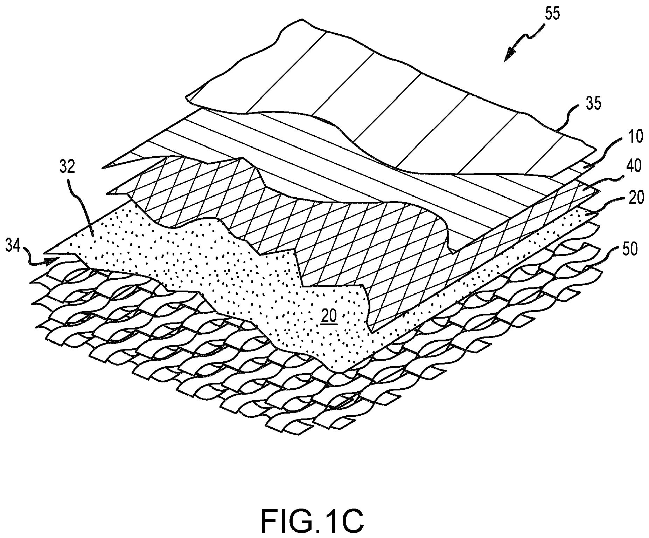

Referring now to the drawings, FIG. 1A shows a composite laminate 5 and a laminate lay-up construction or assembly in accordance with various embodiments. The composite laminate 5 includes a layer of a carbon nanomaterial reinforced film 10 comprising of a polymer resin and a functionalized carbon nanomaterial, a support veil 20, and one or more of a composite layer 50. FIG. 1B shows a composite laminate 55 and a laminate lay-up construction or assembly, in accordance with various additional embodiments, and includes a lightning strike layer 40. FIG. 1C shows a perspective, cut-away view of the composite laminate 55, with a functionalized carbon nanomaterial reinforced film 10, a support veil 20, a lightning strike layer 40 and a composite layer 50 (or plurality of layers). The support veil 20 has opposing sides, including an upper side 32 (or a first side) and a lower side 34 (or a second side), with the upper side 32 adjacent to the lightning strike layer 40 in FIGS. 1B and 1C, and the lower side 34 lying adjacent to the composite layer 50 in FIGS. 1A, 1B and 1C. FIG. 1C also shows a paint layer 35 (or plurality of layers). Note that in the various embodiments described in this disclosure, the term "carbon nanomaterial" may refer to graphene nanoplatelets, carbon nanofibers, or single wall or multiwall carbon nanotubes and the functionalized carbon nanomaterial reinforced film 10 may comprise either one or a combination of functionalized graphene nanoplatelets, functionalized carbon nanofibers, functionalized single wall carbon nanotubes, and/or functionalized multiwall carbon nanotubes.

The functionalized carbon nanomaterial reinforced film 10 of the embodiments shown in FIGS. 1A and 1B can form the outer surface of an external part of an aerospace vehicle such as an aircraft. The functionalized carbon nanomaterial reinforced film 10 has an upper side 12 (or an outer side) and a lower side 14 (or an inner side), where the upper side 12 can form a portion of the outer surface of an external part. An external part, as used herein, means any component that is exposed to the environment during service in flight or on the ground. The external part may include, but is not limited to, aircraft components such as a fuselage, an empennage, a wing, an engine or nacelle, a vertical tail and a rotor blade, including any sub-components or portions thereof. The external part may also include, without limitation, other non-aircraft components that have similar functional or performance features, such as wind turbine blades.

The functionalized carbon nanomaterial reinforced film 10 may include various embodiments of functionalized carbon nanomaterials. For example, the functionalized graphene nanoplatelets may comprise graphene nanoplatelets functionalized simultaneously with a hindered amine light stabilizer and alkoxysilane. Inclusion of the hindered amine light stabilizer (or HALS) is beneficial in that any free radicals generated in the polymer resin (e.g., in the film 10) via exposure to UV light and that cause degradation of the surface film and expose the composite layer 50 and the composite laminate 5 or the composite laminate 55 to UV degradation may be terminated by the HALS. Inclusion of HALS is not limited to functionalizing the carbon nanomaterial and may be free-standing; however, functionalizing the carbon nanomaterial with HALS increases the likelihood and efficacy of free radical termination by reducing the distance needed for a charged particle, e.g., an electron, to pass from the carbon nanomaterial to the HALS functional molecule. Functionalizing the carbon nanomaterial with the HALS functional molecule also aids in the distribution of the HALS throughout the resin to the same degree as the functionalized carbon nanomaterial. Inclusion of the alkoxysilane is beneficial in that it helps bond the nanomaterial to the resin molecule. Functionalizing the nanomaterial with the alkoxysilane and subsequent bonding to the resin molecules reduces the likelihood of agglomeration of the carbon nanomaterial particles, and disperses the carbon nanomaterial in a substantially uniform manner in the resin. Bonding the nanomaterial to the resin molecules also reduces the likelihood of the nanomaterial escaping from the resin as a free particle. This makes the composites comprising such nanomaterials safe for the environment by preventing nanomaterials from being accidentally released into the air and becoming an inhalation hazard. In various embodiments, the alkoxysilane comprises (3-Aminopropyl) trimethoxysilane, an amino-silane that may be used as a silane coupling agent for the surface modification of a variety of nanomaterials, or (3-Glycidyloxypropyl)trimethoxysilane, a bifunctional organosilane with three methoxy groups on one side and an epoxy ring on the other. Other alkoxysilanes include monoalkoxysilane, dialkoxysilane or trialkoxysilane. In addition to the hindered amine light stabilizer and the alkoxysilane, the carbon nanomaterial may comprise graphene nanoplatelets mixed simultaneously or functionalized with a UV absorber (e.g., an organic UV filter) for added UV resistance or to enhance UV resistance over a broader UV spectrum that otherwise might occur without the UV absorber. In various embodiments, the ultraviolet absorber comprises at least one of a hydroxyphenyl-triazine, a hydroxyphenylbenzotriazole, a resorcinyl triazine, or a tetraalkyl piperidine. In various embodiments, the functionalization of the graphene nanoplatelets occurs via an esterification synthesis reaction. In various embodiments, the graphene nanoplatelets exhibit widths on the order of 1-500 micrometers (µm) and are arranged in one, two, three and up to even twenty-layer stacks. The oxygen content on the surface (or surface oxygen) of the graphene platelets typically ranges from 1-15%, the surface oxygen referring to the oxygen-containing functional groups that extend away from a planar surface of an oxidized graphene particle and are suitable for functionalization with alkoxysilanes.

In various embodiments, the carbon nanomaterials may range in size in the order of 1 - 500 nanometers (nm) in at least one of the dimensions, and can have sizes of the order of 10 nm to over 1 millimeter (mm) in the other two dimensions. In one embodiment, the functionalized carbon nanomaterial reinforced film 10 includes carbon nanomaterial having an average diameter of about 10 to about 300 nanometers (nm) and an average length of about 50 nanometers (nm) to about 50 millimeters (mm). In one embodiment, the carbon nanomaterial includes carbon nanofibers have a diameter of about 150 nanometers (nm) and a length of about 10 millimeters (mm). In another embodiment, the carbon nanomaterial includes graphene nanoplatelets with an average platelet width of about 5 nm to 100 nm, depending on the number of stacked layers of graphene sheets and platelet size of 1 micrometer (µm) to 500 µm. The percentage of functionalized carbon nanomaterial in the functionalized carbon nanomaterial reinforced film 10 can be up to about 8% by weight. In another embodiment, the amount of functionalized carbon nanomaterial in the film can be up to about 20% by weight, with a preferred amount dependent upon the viscosity of the starting selected resin and the preferred viscosity of the resin with the nano-reinforcement.

In various embodiments, the functionalized carbon nanomaterial reinforced film 10, may also include non-carbon nanomaterials, such as, for example, one or more of nanoclay, silicon dioxide, aluminum oxide, aluminosilicate, nanosilicates, nano-aramid and nano-alumina, or nano-silicon carbide in addition to functionalized carbon nanomaterials, each of which imparts multifunctional attributes to the films, such as lower weight densities, higher strengths, higher erosion and abrasion resistance, higher thermal conductivity, higher thermal cycling resistance and higher UV resistance. When the resin comprises other nano-particles in addition to the carbon nanomaterials, the amount of carbon nanomaterials can be decreased. When the resin viscosity is low, e.g., at about 500 centipoise (cP), the total amount of all nanomaterial (carbon and non-carbon) reinforcements can be higher, e.g., up to about 20% by weight.

In other embodiments, the specific carbon nanomaterials used in the formation of the functionalized carbon nanomaterial reinforced film 10 can be varied to include one or more of the carbon nanofibers, graphene nanoplatelets, single wall carbon nanotubes or multiwall carbon nanotubes. The relative amounts of the specific carbon nanomaterials can be varied. In one example, the carbon nanotubes are multi-walled carbon nanotubes (MWCNTs). The MWCNTs can comprise between about 0.2% to about 0.7% by weight of the film. A relatively low percentage of MWCNTs is preferred since the addition of MWCNTs can increase the viscosity of the resulting polymer resin during formation of the functionalized carbon nanomaterial reinforced film 10. In one example, MWCNTs preferably comprise about 0.5% by weight of the film, with a preferred range of between about 0.2% to about 0.5% by weight of the film. The MWCNTs have a diameter between about 5 nanometers (nm) and about 100 nanometers (nm), and an average length of between about 0.5 micrometers (µm) and about 5 millimeters (mm). In an example, the MWCNTs have an average diameter of about 9.5 nanometers (nm) and an average length of about 1.5 micrometers (µm). In various other embodiments, the carbon nanotubes can be single-wall carbon nanotubes, or a mixture of MWCNTs and single-wall carbon nanotubes. Either one or more than one of the carbon nanomaterial can be functionalized prior to film formation. Functionalization can occur, for example, by heat-treating the fibers in a controlled atmosphere containing ozone, in a process referred to as ozonolysis. An exemplary functionalization process is described in U.S. Patent Application Publication No. 2009/0186214,. In one embodiment where both carbon nanofibers and nanotubes comprise the nanomaterial, the nanomaterial can comprise up to about 10% by weight of the functionalized carbon nanomaterial reinforced film 10. In another embodiment, the carbon nanomaterials comprise up to about 8% by weight of the functionalized carbon nanomaterial reinforced film 10. In yet another embodiment, the carbon nanomaterials comprise up to about 5% by weight of the functionalized carbon nanomaterial reinforced film 10.

As stated above in one example, the functionalized carbon nanomaterial reinforced film 10 can comprise carbon nanotubes, carbon nanofibers, graphene nanoplatelets and a polymer resin. The polymer resin in one embodiment is a toughened epoxy resin. Epoxy resin is preferable for use in aerospace composite components as it provides an excellent combination of performance attributes desired for these structures, including but not limited to high strength to weight ratio, damage tolerance, environmental resistance and durability. In alternative embodiments, other resins can be used, such as polyimides, bismaleimides, polyamides, benzoxazines, polyesters, vinylesters, bismaelimides, phenolics, polyurethanes, polyaryl ether ketones, nylons, polycarbonates and cyanate esters. The formation of the carbon nanomaterial and polymer resin into the functionalized carbon nanomaterial reinforced film 10 is further described below. Once formed, the functionalized carbon nanomaterial reinforced film 10 can have an areal weight between about 40 g/m² and about 400 g/m². In one example, the functionalized carbon nanomaterial reinforced film 10 has an areal weight of less than about 100 g/m². In another example, the functionalized carbon nanomaterial reinforced film 10 has an areal weight of less than about 150 g/m².

A support veil 20 is combined with the functionalized carbon nanomaterial reinforced film 10 for support and to limit stretching or tearing of the functionalized carbon nanomaterial reinforced film 10 during the composite laminate lay-up process. The support veil 20 also adds dimensional stability and provides superior cured ply thickness control to the composite laminate 5 and the composite laminate 55. The support veil 20 can enable the functionalized carbon nanomaterial reinforced film 10 to provide a smooth covering for bulk carbon composite structures and add stiffness and strength to the surface film with minimal weight gain. As shown in FIGS. 1A-1C, the support veil 20 has opposing sides (the upper side 32 and the lower side 34), with the lower side 34 lying adjacent to the composite layer 50 in FIGS. 1A, 1B and 1C, and the upper side 32 adjacent to the lightning strike layer 40 in FIGS. 1B and 1C. The support veil 20 in one embodiment is a nonwoven mat of carbon fibers and a binder. The nonwoven mat is preferably a nonwoven material formed from chopped fibers, such as Optimat^{®}, available from Technical Fibre Products of Schenectady, NY. Most preferably the chopped fibers are carbon fibers. The binder can comprise about 5% by weight of the support veil 20. In one embodiment, the binder can be a polyvinyl alcohol (PVA) binder. Other polymeric binders can be used in the support veil 20 as needed. The support veil 20 can have an areal weight of between about 3 g/m² and about 50 g/m². In one embodiment, the support veil 20 is a carbon veil with an areal weight of less than about 20 g/m². The support veil 20 does not carry structural load unlike heavier fabrics (with areal weights typically greater than about 70 g/m²) used in conventional load-bearing composite structures, such as the composite layer 50 below. However the support veil 20 does improve the structural integrity of the surface film and helps prevent it from tearing and wrinkling during the manufacture and handling of the surface film as well as during lay-up and fabrication of the composite laminate 5 or 55 described herein.

In one embodiment, the functionalized carbon nanomaterial reinforced film 10 and support veil 20 can be combined in such a way that no interface between the functionalized carbon nanomaterial reinforced film 10 and the support veil 20 is observable. That is, the functionalized carbon nanomaterial reinforced film 10 and the support veil 20 can form a single layer material. In this embodiment, the support veil 20 is pre-impregnated with the carbon nanomaterial and the polymer resin mixture serving as the matrix such as in conventional prepreg processing technology known in the art that will result in a seamless single layer film. Similarly, in alternative embodiments comprising a lightning strike layer 40, the functionalized carbon nanomaterial reinforced film 10, the lightning strike layer 40 and the support veil 20 can all be combined in such a way that the interface between the three is not observable and they appear as a single layer material and constitute the surface film.

Continuing with FIGS. 1A-1C, the composite layer 50 in a preferred embodiment can include a carbon fabric reinforcement impregnated with an epoxy resin. The composite layer 50 can be formed from any reinforcement, however, such as a braid, knit, woven, nonwoven, unidirectional fiber tow, or other known reinforcement configurations, and combinations thereof. Such reinforcements typically have areal weights of greater than about 70 g/m². In addition, the composite laminate 50 can be formed of one or more composite layers of a reinforcement - e.g., two, three or four or more layers of a reinforcement material. In alternative embodiments, resins such as epoxies, polyimides, bismaleimides, polyamides, benzoxazines, polyesters, vinylesters, bismaelimides, phenolics, polyurethanes, polyaryl ether ketones, nylons, polycarbonates and cyanate esters can be used.

As shown in FIGS. 1B and 1C, the composite laminate 55 can include a lightning strike layer 40 between the carbon nanomaterial reinforced film 10 and the support veil 20. In an alternative embodiment, the lightning strike layer 40 can be placed between the support veil 20 and the composite layer 50. Various substrates can be used for the lightning strike layer 40. For example, an expanded metallic sheet or mesh (e.g., formed from aluminum, copper, bronze, nickel or silver), a metal fabric (e.g., formed from copper, bronze, aluminum, nickel or silver), or composite fabric as described in U.S. Patent Application Publication No. 2009/0186214Where aluminum is used as the lightning strike layer 40, the support veil 20 is preferably a polyester veil. In addition, a composite layer (not shown in FIG. 1B or 1C) comprising glass fibers pre-impregnated with epoxy resin is preferably placed directly adjacent and beneath the surface film to minimize galvanic corrosion of the aluminum.

Airworthiness certification authorities have established standards for lightning strike protection for various types of aircraft and aircraft components. Providing a lightning strike layer 40 allows aircraft and aircraft components to meet such standards so that electrical energy generated by such a strike are appropriately dissipated to avoid substantial damage. Unfortunately, the provision of a metal screen in the conventional lightning strike layer can contribute to differences in thermal expansion characteristics for the laminate structure, which can lead to microcracking. Using the functionalized carbon nanomaterial reinforced film 10 with the support veil 20 layer, can reduce or minimize, if not eliminate microcracking that can result with use of the lightning strike layer 40 made from metallic materials such as a metal screen (e.g., the lightning strike layer 40 may be in accord with U.S. Patent No. 9,511,562), as will be discussed below. In addition, for the composite laminate 5 or the composite laminate 55, the upper side 12 (or external surface) may be subsequently and optionally coated with a paint layer 35 (which may include an optional primer layer) as shown in FIG. 1C.

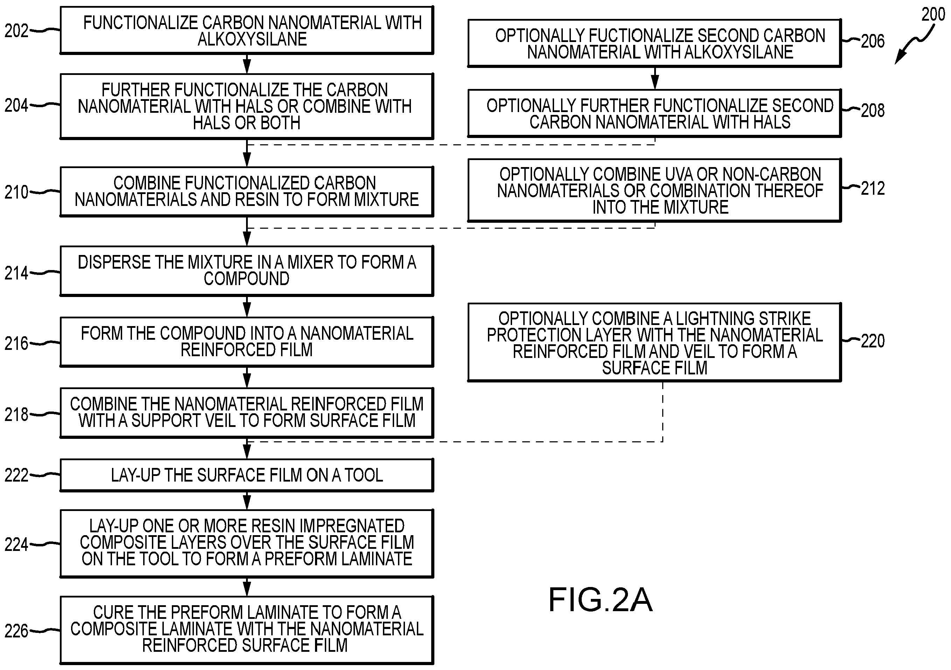

Turning now to FIG. 2A, a process 200 of fabricating the surface film 10 and incorporation into the composite laminate 55 (or the composite laminate 5) is shown. Initially, in a first step 202, a first carbon nanomaterial (graphene nanoplatelet) is functionalized with alkoxysilane to form a functionalized carbon nanomaterial. In a second step 204, the carbon nanomaterial is further functionalized with HALS or combined with HALS or both. In a third step 206, which is optional, a second carbon nanomaterial (e.g., carbon nanofibers (CNF)) is functionalized with an alkoxysilane. In a fourth step 208, which is also optional, the second carbon nanomaterial is further functionalized with a HALS. In one embodiment, optional steps 206 and/or 208 may be repeated for a third or additional carbon nanomaterials (e.g., single-wall carbon nanotube, graphene nanoplatelets of a different size, etc.), and used in the subsequent steps. Alternatively, the first and second and the additional carbon nanomaterials may all be combined together first and functionalized together with alkoxysilane and/or HALS. In a fifth step 210, a resin is combined with the first functionalized carbon nanomaterial and, if present, the second functionalized carbon nanomaterial, to form a mixture. In a sixth step 212, which is optional, UVA or other non-carbon materials (e.g., nano-alumina, nano-silica, silicon carbide, nano aramid fibers, etc.) or combinations thereof are added to the mixture. In a seventh step 214, the mixture is dispersed using a suitable high shear mixer and under shear speeds and temperature conditions known in the art to form a compound with all the functionalized carbon, HALS and optional non-carbon nanomaterials and UVA adequately dispersed and distributed to form a compound. In an eight step 216, the compound is formed into a film - a nanomaterial reinforced film. The nanomaterial reinforced film may be formed to have a desired areal weight using an extruder or other suitable method under operating conditions known in the art. In a ninth step 218, the functionalized carbon nanomaterial reinforced film is combined with a support veil. In one embodiment, the functionalized carbon nanomaterial reinforced film is infused with the support veil via a roll-compaction film transfer, such as in conventional film transfer prepreg technology as is known in the art. Optionally, as shown in a tenth step 220, the functionalized carbon nanomaterial reinforced film and support veil can be combined with a lightning strike layer. The lightning strike layer can also be assembled using conventional film transfer prepreg technology as known in the art. The lightning strike layer can be positioned adjacent the support veil layer on either side of the support veil. The lightning strike layer is preferably placed adjacent to the support veil closer to the external surface and farther away from the composite substrate relative to the support veil. The functionalized carbon nanomaterial reinforced film, support veil and optionally the lightning strike layer can be applied and consolidated through a series of hot rollers as is known in the art in a single process either simultaneously or sequentially to form the surface film. Also, as is known in the art, a peel ply may be applied to one or both sides of the surface film as a part of the film forming process.

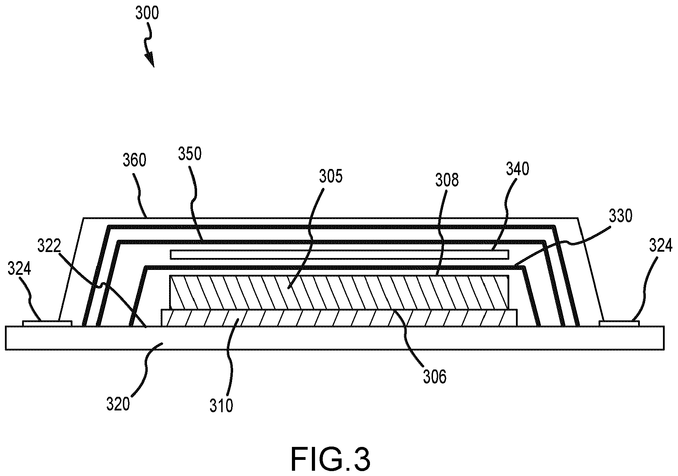

In an eleventh step 222, the surface film is layed-up on a tool to form a composite laminate. In a twelfth step 224, one or more composite layers comprising of a resin and reinforcement may be combined to form a composite preform laminate, which, when cured, becomes the composite laminate 55 (or the composite laminate 5) described above and as shown in FIG. 3. The composite layers comprising the resin and the reinforcement may be collectively referred as the composite substrate. Conventional methods to lay up the surface film and composite layers can be used, as are known in the art. Alternatively, the preform can be formed through a resin infusion process as known in the art, and then combined in a hand lay-up process with the functionalized carbon nanomaterial reinforced film and support veil, followed by curing in an autoclave as discussed below. Steps 222 and 224 include placing the preform laminate on a tool for further processing; schematic of a lay-up assembly including the preform laminate is provided in FIG. 3, in accordance with various embodiments.

In a thirteenth step 226, the lay-up assembly (see FIG. 3) is placed in conventional composite processing equipment, such as an autoclave, to cure the preform laminate and form the composite laminate. During this step 226, the polymer resins in the functionalized carbon nanomaterial reinforced film and the preform are cured. Thus, the step 226 can cure both the resin that is included in the surface film and in the composite layers to form the composite laminate. When the first and second polymer resins are the same (e.g., both are epoxy), the preform laminate can be exposed to temperatures of up to about 350 °F (≈ 176 °C), and pressures of up to about 100 psig (≈ 690 kPa) for times sufficient to cure the polymer resins. Higher temperatures and pressures are sometimes required depending upon the resin used. For example, polyimides usually have a higher cure temperature of about 600 °F (≈ 315 °C) to about 700 °F (≈ 371 °C) and pressures up to about 200 psig (≈ 1380 kPa). The cured laminate is then cooled, and the composite laminate part is removed from the lay-up assembly (see FIG. 3).

While the above described method is directed primarily at a functionalized carbon nanomaterial reinforced compound wherein the nanomaterial is functionalized with hindered amine light stabilizer and alkoxysilane, it is noted the disclosure contemplates other compounds that may be formed using similar steps with any of the other carbon nanomaterials, including without limitation, graphene nanoplatelets, carbon nanofibers, single-wall carbon nanotubes or multi-wall carbon nanotubes, or combinations of two or more, that may be functionalized with any of the alkoxysilanes and additionally with hindered light amine stabilizers known in the art. For example, the disclosure further contemplates (i) alkoxysilane-functionalized carbon nanomaterials, where the carbon nanomaterials act as a UV absorber, (ii) alkoxysilane-functionalized carbon nanomaterials with the addition of hindered amine light stabilizer in the resin, (iii) carbon nanomaterials with dual functionalization, such as, for example, alkoxysilane-functionalized and hindered amine light stabilizer functionalized carbon nanomaterials and (iv) any of the above with the addition of other UV absorber materials to enhance absorption or resistance of the surface film to degradation from exposure to UV radiation.

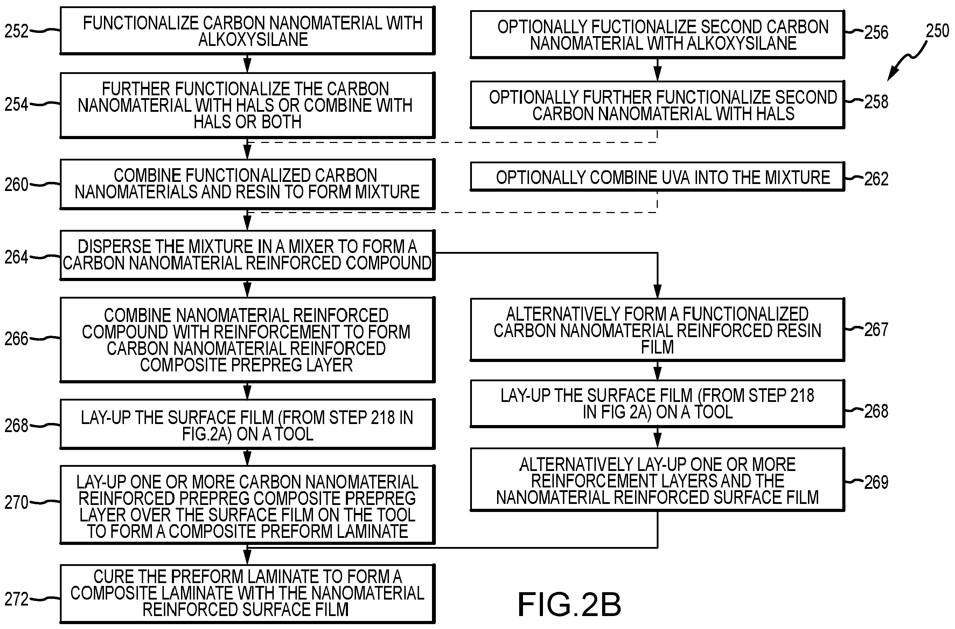

Turning now to FIG. 2B, a process 250 of fabricating a second composite laminate comprising functionalized carbon nanomaterial with a nanoreinforced surface film 10 is shown. Initially, in a first step 252, a first carbon nanomaterial (e.g., graphene nanoplatelet) is functionalized with alkoxysilane to form a functionalized carbon nanomaterial. In a second step 254, the carbon nanomaterial is further functionalized with HALS or combined with HALS or both. In a third step 256, which is optional, a second carbon nanomaterial (e.g., carbon nanofibers (CNF)) is functionalized with an alkoxysilane. In a fourth step 258, which is also optional, the second carbon nanomaterial is further functionalized with a HALS. In one embodiment, optional steps 256 and/or 258 may be repeated for a third or additional carbon nanomaterials (e.g., single-wall carbon nanotube, or graphene nanoplatelets of a different size, etc.), and used in the subsequent steps. Alternatively, the first and second and additional carbon nanomaterials may all be combined together first and functionalized with alkoxysilane and/or HALS together in steps 252 and 254. In a fifth step 260, a resin is combined with the first functionalized carbon nanomaterial and, if present, the second functionalized carbon nanomaterial, to form a mixture. In a sixth step 262, which is optional, UVA is added to the mixture. In a seventh step 264, the mixture is dispersed using a suitable high shear mixer and under shear speeds and temperature conditions known in the art to form a compound with all the functionalized carbon, HALS and UVA adequately dispersed and distributed to form a compound.

In an eight step 266, the compound is combined with a reinforcement (e.g., woven carbon fabric comprising of continuous carbon fiber tows) to form a composite prepreg layer. The prepreg layer comprising the compound and reinforcement may be formed using a compaction roller or other suitable method under operating conditions known in the art. In one embodiment, the compound comprising the functionalized carbon nanomaterial and optionally HALS and UVA is formed into a film and infused into the reinforcement (e.g., a woven carbon fabric) via a roll-compaction film transfer, such as in conventional prepreg technology as is known in the art. Also, as is known in the art, a peel ply may be applied to one or both sides of the prepreg layer during the prepreg forming process. Alternatively, in the eighth step 266, the compound from the seventh step 264 may be formed into a film in an alternative step 267 in place of step 266.

In a ninth step 268, the surface film from step 218 as described above and shown in Figure 2A, is layed-up on a tool in order to form a composite preform laminate. In a tenth step 270, one or more composite prepreg layers from step 266 may be combined to form a composite preform laminate. Conventional methods to lay up the surface film and composite prepreg layers can be used, as are known in the art, for example a hand lay-up process. Alternatively, one or more reinforcement layers and the film from step 267 may be placed on the tool (e.g., one or more alternating layers of a woven carbon fabric and the carbon nanomaterial resin film of step 267) in step 269. The composite prepreg layers comprising of the reinforcement and the functionalized carbon nanomaterial reinforced resin may collectively be referred to as functionalized carbon nanomaterial reinforced composite substrate.

Step 268 and step 270 include placing the surface film and the composite prepreg layers on a tool for further processing; similarly alternative process steps 268 and 269 include placing the surface film and one or more reinforcement and resin film layers on a tool for further processing; the schematic of a lay-up assembly including the preform laminate is provided in FIG. 3, in accordance with various embodiments.

In an eleventh step 272, the lay-up assembly (see FIG. 3) is placed in conventional composite processing equipment, such as an autoclave, to cure the preform laminate and form the composite laminate. During this step 272, the polymer resins in the functionalized carbon nanomaterial reinforced surface film and those in the composite layers are cured. When the composite preform laminates are layed-up in accordance with step 269, the resin film infuses into the reinforcement layers during the curing process. The step 272 can cure both the resin that is included in the surface film and in the composite layers to form the composite laminate. When the first and second polymer resins are the same (e.g., both are epoxy), the preform laminate can be exposed to temperatures of up to about 350 °F (≈ 176 °C), and pressures of up to about 100 psig (≈ 690 kPa) for times sufficient to cure the polymer resins. Higher temperatures and pressures are sometimes required depending upon the resin used. For example, polyimides usually have a higher cure temperature of about 600 °F (≈ 315 °C) to about 700 °F (≈ 371 °C) and pressures up to about 200 psig (≈ 1380 kPa). The cured laminate is then cooled, and the composite laminate part is removed from the lay-up assembly (see FIG. 3).

Referring now to FIG. 3 a lay-up assembly 300 is illustrated, in accordance with various embodiments. The lay-up assembly 300 can include use of a peel-ply material 310 placed directly on a tool 320. A preform laminate 305 includes a first side 306 that has the functionalized carbon nanomaterial reinforced film thereon, and a second side 308. The first side 306 of the preform laminate 305 is placed on the peel-ply material 310. The peel-ply material 310 facilitates removal of the preform laminate 305 from the tool 320 upon completion of a curing step further detailed below. A non-permeable release film 330 can be placed over the preform laminate 305, followed by an optional caul sheet 340. A permeable substrate 350, such as an expanded fiberglass (woven or nonwoven) that helps create a bleed path for porosity to be removed during curing, is placed over the peel-ply material 310, preform laminate 305, non-permeable release film 330, and the optional caul sheet 340. The ends of the permeable substrate 350 and non-permeable release film 330 are combined on a tool surface 322. A vacuum barrier 360 is then placed over the assembly and sealed to the tool surface 322 via a vacuum seal 324. The above-described processing is intended to illustrate merely one method of forming the composite laminate disclosed herein. Alternative manufacturing methods other than the hand lay-up described above also are available, including resin film infusion (RFI), resin transfer molding (RTM), and other processes that are suitable for the intended end use of the functionalized carbon nanomaterial reinforced film and laminate and are well known to those skilled in the art.

While the functionalized carbon nanomaterial reinforced film 10, support veil 20, composite layer 50, lightning strike layer 40 and optional primer and paint layer 35 have been shown and described above in relation to their position adjacent one another, this disclosure includes composite structures where the layers are juxtaposed differently. For example, the lightning strike layer 40 can be positioned between the support veil 20 and composite layer 50, instead of the configuration shown in FIG. 1B. Fabrication of such structures where the aforementioned layers can be re-positioned will occur as set forth above and consistent with known assembly methods.

The composite laminate part can be used on various external components and is particularly well suited for aircraft components such as fuselage, wings, engine and nacelle, pylons and vertical and horizontal stabilizers. In other embodiments, the composite laminate part can form the leading edge of the inlet lip and cowl of an engine nacelle, the leading edges of the horizontal and vertical stabilizers of the tail, and the leading edges of the wings. Further, composite laminates as described herein are well suited for use on the surface of acoustic structures of the type described in U.S. Pat. No. 7,921,966. The laminates described herein can be readily perforated and tuned for desired noise-attenuation and can have a surface finish to facilitate smooth laminar air flow. Such structures can also be manufactured for a 360-degree linear acoustic liner for optimal inner barrel performance.

The composite laminates as described herein provide a favorable surface finish to an aircraft part, improved UV protection, erosion protection, resistance to microcracking from thermal cycling, and abrasion resistance. Use of such a composite laminate for external aircraft parts has been found to eliminate additional surface finishing that might otherwise be required to provide the stated combination of properties. In installations where additional surface treatment is nonetheless desired, the outer surface (e.g., the upper side 12 of the functionalized carbon nanomaterial reinforced film 10) may be subsequently and optionally coated with a primer and paint layer 35 as shown in FIG. 1C.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, Band C may be present in a single embodiment; for example, A and B, A and C, B and C, or A and B and C. Different cross-hatching is used throughout the figures to denote different parts but not necessarily to denote the same or different materials.

Systems, methods and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Numbers, percentages, or other values stated herein are intended to include that value, and also other values that are about or approximately equal to the stated value, as would be appreciated by one of ordinary skill in the art encompassed by various embodiments of the present disclosure. A stated value should therefore be interpreted broadly enough to encompass values that are at least close enough to the stated value to perform a desired function or achieve a desired result. The stated values include at least the variation to be expected in a suitable industrial process, and may include values that are within 10%, within 5%, within 1%, within 0.1%, or within 0.01% of a stated value. Additionally, the terms "substantially," "about" or "approximately" as used herein represent an amount close to the stated amount that still performs a desired function or achieves a desired result. For example, the term "substantially," "about" or "approximately" may refer to an amount that is within 10% of, within 5% of, within 1% of, within 0.1% of, and within 0.01% of a stated amount or value.

Furthermore, no element, component, or method step in the present disclosure is intended to be dedicated to the public regardless of whether the element, component, or method step is explicitly recited in the claims. As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

Finally, it should be understood that any of the above-described concepts can be used alone or in combination with any or all of the other above-described concepts. Although various embodiments have been disclosed and described, one of ordinary skill in this art would recognize that certain modifications would come within the scope of this disclosure. Accordingly, the description is not intended to be exhaustive or to limit the principles described or illustrated herein to any precise form. Many modifications and variations are possible in light of the above teaching.

## Claims

1. A surface film (10), comprising:
a polymer resin;
a hindered amine light stabilizer;
a functionalized carbon nanomaterial, wherein the functionalized carbon nanomaterial is functionalized with an alkoxysilane; and
a support veil (20).

2. The surface film (10) of claim 1, wherein the functionalized carbon nanomaterial is further functionalized with the hindered amine light stabilizer.

3. The surface film of claims 1 or 2, further comprising an ultraviolet absorber (UVA) and wherein the ultraviolet absorber optionally comprises at least one of a hydroxyphenyl-triazine, a hydroxyphenylbenzotriazole, a resorcinyl triazine, or a tetraalkyl piperidine.

4. The surface film (10) of any preceding claim, wherein the functionalized carbon nanomaterial is further functionalized with an ultraviolet absorber.

5. The surface film (10) of any preceding claim, wherein the functionalized carbon nanomaterial includes at least one of a graphene nanoplatelet, a carbon nanofiber, a single wall carbon nanotube, or a multiwall carbon nanotube.

6. The surface film (10) of any preceding claim, further comprising a non-carbon nanomaterial.

7. The surface film (10) of claim 6, wherein the non-carbon nanomaterial includes at least one of a nanoclay, silicon dioxide, aluminum oxide, aluminosilicate, silicon carbide or aramid.

8. The surface film (10) of any preceding claim, further comprising a lightning strike layer (40) comprising a metal screen positioned proximate to the support veil (20).

9. The surface film (10) of any preceding claim, wherein the support veil (20) comprises a binder and at least one of carbon fibers or glass fibers, the support veil having an areal weight of less than about 20 grams per square meter.

10. A composite laminate (5; 55), comprising:
the surface film (10), of any preceding claim; and
a composite substrate (50) comprising one or more composite layers, wherein the composite layer comprises of a reinforcement and resin.

11. The composite substrate of claim 10, wherein at least one of the composite layers of the composite substrate (50) comprises of functionalized carbon nanomaterial, and wherein the carbon nanomaterial is functionalized with an alkoxysilane.

12. The composite substrate (5; 55) of claims 10 or 11, wherein the carbon nanomaterial of the composite substrate (50) is further functionalized with the hindered amine light stabilizer.

13. The composite substrate of any of claims 10 to 12, wherein at least one of the composite layers of the composite substrate (50) further comprises an ultraviolet absorber and wherein the ultraviolet absorber of the composite substrate (50) optionally comprises at least one of a hydroxyphenyl-triazine, a hydroxyphenylbenzotriazole, a resorcinyl triazine, or a tetraalkyl piperidine.

14. The composite substrate of any of claims 10 to 13, wherein the composite substrate (50) comprising of the functionalized carbon nanomaterial is further functionalized with an ultraviolet absorber.

15. The composite substrate of any of claims 10 to 14, wherein the functionalized carbon nanomaterial of the composite substrate (50) includes at least one of a graphene nanoplatelet, a carbon nanofiber, a single wall carbon nanotube, or a multiwall carbon nanotube.
